# EUROPEAN PATENT APPLICATION

(11) **EP 4 592 260 A1**
(43) Date of publication of application: **30.07.2025**
(21) Application number: 24223346.8
(22) Date of filing: 27.12.2024
(51) Int. Cl.: C03C 17/00, B05D 1/02, B05D 3/02

(54) **METHOD FOR DECORATING A GLASS CONTAINER WITH PAINT**

(30) Priority: 27.12.2023 BE 202306069
(71) Applicant: Baobab Collection SA, 1300 Wavre (BE)
(72) Inventor: LAHY, Alain, 1300 Wavre (BE); AUGUSTO, Arnaud, 1300 Wavre (BE); DELEVAL, Eléonore, 1300 Wavre (BE); GARDIES, Jonathan, 1300 Wavre (BE)
(74) Representative: Brantsandpatents bv

(57) **Abstract**

The current invention relates to a method for decorating a glass container with paint, comprising the steps of: (i) spraying paint on a glass container, (ii) drying said glass container for at least 30 minutes, (iii) transferring said glass container to an oven, wherein said glass container is subjected to a thermal treatment, (iv) removing said glass container from said oven.

## Description

### FIELD OF THE INVENTION

The present invention relates to a method for decorating a glass container with paint and decorated glass container.

### BACKGROUND

The decoration of glass containers, particularly jars, is a well-established practice in industries ranging from food and beverage to cosmetics and pharmaceuticals, aiming to enhance aesthetic appeal and brand differentiation. However, conventional methods of applying paint and other decorative materials to these containers often present significant challenges. These methods can be inefficient, time-consuming, and unable to consistently produce high-quality, durable finishes. In particular, traditional techniques may result in uneven application of paint, limited adherence, and a lack of precision in decorative patterns. This not only affects the aesthetic quality but can also lead to increased waste and higher production costs due to the need for reworking or discarding imperfectly decorated containers.

WO2017068194, FR3126190, CN116750979, EP3403999 disclose decoration methods.

Moreover, the existing processes are typically constrained by the limited versatility and adaptability of the decoration techniques. They often struggle with rapidly changing design trends and the growing demand for customization and small-batch production capabilities. Current methods may also involve extensive manual labor or complex machinery setups that are not scalable or flexible for different jar sizes and shapes. This inflexibility leads to longer turnaround times and difficulties in meeting market demands for quick and diverse product offerings. Additionally, many of the current techniques have environmental drawbacks, such as the use of solvents and high energy consumption in the drying and curing processes, aligning poorly with the increasing environmental regulations and consumer demand for sustainable practices.

Therefore, there is a pressing need for an improved method of decorating glass containers that addresses these shortcomings.

### SUMMARY OF THE INVENTION

The invention relates to a method for decorating glass containers with paint, specifically by spraying paint onto the container while it rotates, drying it for at least 30 minutes, and then subjecting it to a three-step thermal treatment.

The decorated glass container produced by this method is of high quality and durability, with vibrant, full, and precise decorative designs. The method is also cost-effective, environmentally friendly, and adaptable to different container sizes and shapes, offering significant improvements over conventional decoration techniques.

This method offers several advantages. Firstly, by employing a precisely controlled thermal treatment, the method ensures that the paint is cured optimally, enhancing the overall durability of the paint layer and prolonging its lifespan on the glass container. Secondly, the method is versatile and adaptable, allowing for the decoration of a wide variety of glass container sizes and shapes. This accommodates different design requirements and promotes small-batch production capabilities. Finally, the method is environmentally friendly, exhibiting a smaller environmental footprint due to its efficient material and energy usage.

The structured steps in the thermal treatment process not only enhance the longevity and consistency of the decoration but also contribute significantly to the overall quality of the final product. By ensuring a uniform heat distribution and a stable curing of the paint, the method also minimizes the risk of defects and imperfections in the decoration, thereby reducing waste and production costs. Moreover, the method is scalable and adaptable to different jar sizes and shapes, making it suitable for both large-scale production and small-batch custom orders.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
The term "glass container" refers to any vessel or receptacle made predominantly of glass, intended for holding various substances. This includes jars, bottles, flasks, etc., and can vary in size, shape, and capacity. The material properties of glass, such as transparency, chemical inertness, and aesthetic appeal, make it suitable for a wide range of applications. In a preferred embodiment, the glass container is a candle container.

The expression "paint" refers to a colored substance that is spread over a surface and dries to leave a thin decorative or protective coating.

The expression "spraying" refers to the action of dispersing a liquid (here, paint) into fine droplets and applying it over a surface, typically using a spray gun or similar tool.

The expression "drying" refers to the process of removing moisture from something (in this case, the paint-coated glass container) typically until it reaches a dry state where it is set or hardened.

The term "oven" in this context is a thermal processing unit used for heating, baking, or drying substances or objects. It is capable of reaching and maintaining various set temperatures, and is essential for processes like baking, curing, or other heat treatments.

The expression "thermal treatment" refers to a process involving controlled heating and cooling cycles, used to alter the properties or appearance of materials, particularly for fixing paint onto glass containers.

The expression "temperature increase rate" refers to the speed at which temperature is raised within the oven, typically measured in degrees Celsius per hour (°C/h).

The expression "end temperature" refers to the final (highest) target temperature achieved in the thermal treatment process, after which the heating is stopped or maintained for a specified period.

The expression "engraving" refers to the process of incising or carving a design onto the surface of an object, such as a glass container, for decorative purposes.

The expression "ambient temperature" refers to the temperature of the surrounding environment where the process is taking place, typically room temperature.

The expression "transferring" refers to the act of moving something from one place to another, here, the process of moving the decorated glass containers into an oven for thermal treatment.

The expression "heating" refers to the process of raising the temperature of an object or substance, in this context, part of the thermal treatment process in the oven.

The expression "cooling" refers to the process of lowering the temperature of an object or substance, in this case, part of the thermal treatment process to finalize the paint application.

The expression "layer" refers to a single thickness, coating, or stratum of material applied to or over a surface, in this case, a single application of paint on the glass container.

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a preferred embodiment of the invention, a method for decorating a glass container with paint is proposed. This method involves a series of steps that are carefully designed to ensure optimal results, both in terms of the aesthetic quality of the decorated glass container and the durability of the paint layer. The method begins with the application of paint on the glass container. This is achieved by spraying the paint onto the container, a process that offers high precision and consistency in the paint distribution. The glass container is then left to dry for a period of at least 30 minutes. This drying time can be extended, if necessary, to ensure that the paint is sufficiently dry before the container is transferred to an oven for thermal treatment.

It is to be understood the steps as disclosed herein are performed sequentially.

The thermal treatment is an important aspect of the method and involves a carefully controlled heating process. This thermal treatment serves to cure the paint, thereby enhancing the durability and longevity of the decoration. The use of a controlled temperature increase speed ensures a consistent and uniform curing process, thereby further enhancing the quality and durability of the decoration.

The glass container is first heated at a temperature increase rate of between 70 and 90°C/h until a temperature of between 70 and 90°C is reached. In a more preferred embodiment, the temperature increase rate is between 75 and 85°C/h until a temperature of between 75 and 85°C is reached. This initial heating stage is designed to gradually raise the temperature of the glass container and the paint layer, preventing any sudden temperature changes that could potentially damage the paint or the glass. The glass container is then heated at a higher temperature increase rate of between 145 and 165°C/h until an end temperature between 165 and 185°C is reached. In a more preferred embodiment, the temperature increase rate is between 150 and 160°C/h until an end temperature of between 170 and 180°C is reached. This second heating stage is designed to cure the paint, enhancing its durability and longevity on the glass surface.

Following this, the glass container is heated for a duration of 10-30 minutes at the end temperature. More preferably, this duration is between 15 and 25 minutes. This step serves to ensure that the paint is fully cured and that the decorative design is securely bonded to the glass surface. The glass container is then cooled by decreasing the temperature in the oven. This cooling process is controlled to prevent any thermal shock that could potentially damage the glass or the paint layer. Once the glass container has cooled down, it is removed from the oven, resulting in a decorated glass container with a durable paint layer.

This method offers several advantages. Firstly, by employing a precisely controlled thermal treatment, the method ensures that the paint is cured optimally, enhancing the overall durability of the paint layer and prolonging its lifespan on the glass container. Secondly, the method is versatile and adaptable, allowing for the decoration of a wide variety of glass container sizes and shapes. This accommodates different design requirements and promotes small-batch production capabilities. Finally, the method is environmentally friendly, exhibiting a smaller environmental footprint due to its efficient material and energy usage.

In a preferred embodiment of the invention, the paint is applied to the glass containers in multiple layers. More preferably, the paint is applied in two layers. The application of paint in multiple layers serves to enhance the final appearance of the decoration on the glass containers. This method ensures that the decoration designs are vibrant, full, and of high quality. The application of multiple layers of paint provides a depth to the decoration that cannot be achieved with a single layer of paint. The multiple layers of paint also provide a greater level of protection to the glass containers, as the paint serves as a protective barrier against scratches and other forms of damage.

The painted container is then left to dry for at least 30 minutes. The drying is preferably air drying.

In case multiple layers are applied, a drying step is carried out between the application of the paint layers on the glass containers. This embodiment is particularly important in ensuring the quality and durability of the decoration. The drying step serves to solidify the applied paint layer before the application of a subsequent layer. This process minimizes the risk of uneven applications that are common in conventional methods. It ensures that each layer of paint is firmly adhered to the container or to the underlying layer of paint before the next layer is applied. This maximizes paint adherence and contributes to the overall durability of the decoration.

In a most preferred embodiment, the drying step is carried out in a controlled environment. This could be a drying chamber or a similar setup where the temperature, humidity, and other environmental factors can be controlled. This ensures that the drying process is consistent and optimal for each container, regardless of the external environmental conditions.

More preferably, the drying step is carried out for a period of between 30 and 60 minutes, preferably between 30 and 40 minutes. This preferred range of time provides a balance between operational efficiency and the quality of the output, ensuring that the decorated glass containers exhibit a high-quality, durable finish. The drying process is critical in ensuring the paint adheres well to the glass surface, and a drying period within this preferred range provides sufficient time for the paint to dry properly without unnecessarily prolonging the decoration process.

In a preferred embodiment of the invention, the glass container is engraved prior to the application of the thermal treatment. This sequence of operations, engraving before thermal treatment, contributes significantly to enhancing the durability and longevity of the decorative engraving on the glass container. This means that the aesthetic appeal and brand differentiation of the decorated glass container are preserved for an extended period, offering a distinct advantage over traditional decoration methods.

The engraving operation involves creating a design or pattern on the surface of the glass container. This is achieved using an engraving device, capable of precisely transferring the desired design onto the container. The engraving process can be tailored to create a wide range of design complexities, from simple geometric patterns to intricate artwork, offering flexibility to cater to different design trends and customization demands. Moreover, the engraving can be performed on different sizes and shapes of glass containers, adding to the versatility of this decoration technique.

In a preferred embodiment of the invention, the paint is applied with a spray gun, preferably manually. This manual application of paint allows for a greater range of potential designs and individual customization. This flexibility in design and customization caters to a wide range of customer preferences and provides a unique selling point for the decorated glass containers. The manual application of paint with a spray gun allows for a greater control over the application process, enabling the creation of intricate designs and patterns that may not be achievable with other, more automated methods. This can result in a higher-quality finish, with more precise and consistent application of paint, leading to a more aesthetically pleasing product.

The use of a spray gun for the application of paint can also contribute to the efficiency of the decoration process. The spray gun allows for a quick and even distribution of paint over the surface of the glass container, which can reduce the time required for the decoration process and increase the production rate. This can also reduce waste, as the spray gun can be precisely controlled to apply the exact amount of paint needed, minimizing overspray and paint wastage.

In a more preferred embodiment, the paint is applied with a spray gun at a distance of between 15 and 25 cm from the surface of the glass container, more preferably between 18 and 22 cm, and most preferably at a distance of 20 cm. This ensures an optimal coverage and even distribution of the paint on the container's surface, contributing to a high-quality finish. In another preferred embodiment, the paint is applied with a spray gun at a pressure of between 2 and 4 bar, more preferably between 2.5 and 3.5 bar, and most preferably at a pressure of 3 bar. This ensures a steady and controlled application of paint, minimizing overspray and paint wastage, and contributing to a more efficient decoration process.

The paint as used in the method, can be any paint as known by the skilled person suitable to decorate glass surfaces. For example:
Acrylic Paints: These are fast-drying paints made of pigment suspended in acrylic polymer emulsion. Acrylic paints are water-soluble but become water-resistant when dry. Due to their fast drying time and water resistance, they are a popular choice for a variety of surfaces, including glass.

Epoxy Paints: Known for their durability and resistance to chemicals and heat, epoxy paints are often used in applications that require a tough and long-lasting finish. They might be particularly suitable for glass containers intended for repeated use or exposure to harsh conditions.

Enamel Paints: Enamel paint is a term that usually refers to oil-based covering products, which leave a hard, glossy, and opaque finish. They are often used for their durability and resistance to the elements. There are also water-based enamel paints that combine the durability of an oil-based paint with the ease of use and cleanup of water-based paint.

In an embodiment, the paint is chosen from acrylic paints, alkyd paints and epoxy paints. In an embodiment, the paint is chosen from acrylic paints and epoxy paints.

Preferred paints are acrylic paints.

The paint preferably comprises pigments, one or more binders and a solvent. In an embodiment, the paint comprises between 10 and 30% by weight of pigments, between 20 and 40% by weight of binders and between 20 and 60% by weight of solvent. Herein the pigment can for example be organic pigments, such as Phthalocyanine blue and quinacridone red, or inorganic pigments, such as titanium dioxide and iron oxides, preferably organic pigments. The binders can be acrylics, epoxy resins, or alkyd resins. The solvent can be water or an organic solvent, such as xylene, toluene, or alcohol. In an embodiment, the paint is an acrylic, alkyd or epoxy paint with organic pigments.

In a preferred embodiment of the invention, the method of decorating glass containers involves the removal of excessive paint after the spraying process. During the spraying process, it is inevitable that some amount of paint might be excessively applied. This excess paint, if not removed, could lead to an uneven finish, compromising the visual appeal of the decorated glass container.

In a preferred embodiment of the method, the excessive paint is removed with a cloth immersed in water. This embodiment provides several advantages that make the decoration process more efficient, cost-effective, and environmentally friendly while maintaining high-quality decoration results.

The use of a water-immersed cloth to remove excessive paint is a simple and effective way of ensuring that the right amount of paint is applied to the glass containers. This method allows for a more precise control over the paint application, reducing the likelihood of uneven coating that can affect the aesthetic quality of the decorated containers. The removal of excessive paint with a water-immersed cloth is an efficient process that can be performed quickly, reducing the overall decoration time and thus increasing the production throughput.

In a most preferred embodiment, the cloth is immersed in water at a temperature between 15 and 25°C, more preferably between 18 and 22°C, and most preferably at 20°C. The temperature of the water can affect the efficiency of the paint removal process and the quality of the decoration. For example, warmer water can soften the paint, making it easier to remove, while cooler water can help to preserve the integrity of the decoration.

In a preferred embodiment of the invention, a lid is applied to the glass container during the spraying of the paint. This step in the method ensures that the interior of the glass container remains uncontaminated by the paint, thereby preserving the purity of the container's content. This technique significantly reduces the necessity for further cleaning processes post-decoration, thereby increasing the efficiency of the overall method and reducing the time and resources required for the production process.

The lid is preferably removed before the thermal treatment.

In a preferred embodiment of the invention, step (a) has a duration of between 30 and 60 minutes. The duration of this phase ensures the quality and durability of the paint application on the glass containers. The gradual heating allows the paint to adhere better and more uniformly to the jar surface, thus improving the quality of decoration.

In this embodiment, the heating is not done abruptly but gradually, with the temperature increase speed being controlled to ensure an even and consistent application of heat. The gradual increase in temperature allows the paint to bond more effectively with the glass surface, resulting in a more durable and high-quality finish. This process is particularly beneficial for complex or intricate designs, where an uneven application of heat could result in inconsistencies in the finished product.

In a more preferred embodiment, the duration of step (a) is between 35 and 55 hours. This more specific duration range further optimizes the heating process, ensuring that the paint is given the optimal amount of time to adhere to the glass surface. This results in an even higher quality finish, with improved durability and resistance to wear and tear.

In the most preferred embodiment, the duration of step (a) is about 45 minutes. This duration has been found to provide the best balance between efficiency and quality of finish. It allows for a sufficient amount of time for the paint to bond with the glass surface, without unnecessarily prolonging the decoration process. This is particularly beneficial in a commercial setting, where time efficiency is important.

It should be noted that the specific durations mentioned above are not restrictive, but rather indicative of the preferred ranges. The exact duration of step (a) can be adjusted based on factors such as the type of paint used, the size and shape of the glass container, and the specific design requirements. However, it is generally recommended to stay within the specified ranges to ensure a high-quality finish.

In a preferred embodiment of the invention, step (b) has a duration of between 25 and 45 minutes, preferably between 30 and 40 minutes. The duration of this phase ensures the quality and durability of the paint application on the glass containers. The gradual heating allows the paint to adhere better and more uniformly to the jar surface, thus improving the quality of decoration.

In a preferred embodiment of the invention, the thermal treatment process begins at an ambient temperature, preferably within the range of 20 to 25°C, preferably between 20 and 23°C.

It is to be understood the steps as disclosed herein are performed sequentially.

The use of ambient temperature as the starting point for the thermal treatment process enhances the efficiency of the method. It eliminates the need for additional energy to preheat the oven, thereby reducing the overall energy consumption of the process. This contributes to the environmental sustainability of the method, aligning it with contemporary standards of eco-friendly operations. Furthermore, by starting at a controlled temperature range, the process can be standardized across different production environments, ensuring consistent quality of the decorated glass containers.

In a specific embodiment of the invention, the method comprises the steps of:
i. spraying paint on a glass container,
ii. drying said glass container for at least 30 minutes,
iii. transferring said glass container to an oven, wherein said glass container are subjected to a thermal treatment, wherein said thermal treatment comprises the steps of:
   a. heating at a temperature increase rate of between 70 and 90°C/h until a temperature of between 70 and 90°C is reached;
   b. heating at a temperature increase rate of between 145 and 165°C/h, wherein an end temperature is reached, wherein said end temperature lies between 165 and 185°C;
   c. heating for 10-30 minutes at said end temperature;
   d. cooling said glass container by decreasing the temperature in the oven thereby obtaining decorated glass container,
iv. removing said glass container from said oven.

In a specific embodiment of the invention, the method comprises the steps of:
i. spraying paint on a glass container,
ii. drying said glass container for at least 30 minutes,
iii. transferring said glass container to an oven, wherein said glass container are subjected to a thermal treatment, wherein said thermal treatment comprises the steps of:
   a. heating for a duration of between 0.5 and 1.5 hours at a temperature increase rate of between 70 and 90°C/h;
   b. heating for a duration of between 25 and 45 minutes at a temperature increase rate of between 145 and 165°C/h, wherein an end temperature is reached;
   c. heating for 10-30 minutes at said end temperature;
   d. cooling said glass container by decreasing the temperature in the oven thereby obtaining decorated glass container,
iv. removing said glass container from said oven.

In a preferred embodiment, the invention pertains further to a glass container decorated with paint, which is preferably achieved through a method as described in the previous embodiments. This method provides a reliable and consistent technique for decorating glass containers, leading to high-quality end products. The method begins with the application of paint to the glass container. This process, therefore, significantly enhances the aesthetic value of the glass container, making it more appealing to consumers and more suitable for various applications.

The method involves a carefully calibrated thermal treatment process, which is designed to ensure optimal adhesion of the paint to the glass container, while also preserving the quality of the paint. This method ensures a uniform application of paint, reducing the likelihood of defects and inconsistencies that can compromise the appearance and durability of the painted glass containers.

The glass container decorated with paint obtained from this method presents a superior solution to the challenges of durability, aesthetic quality, process efficiency, and environmental impact associated with the decoration of glass containers.

### EXAMPLES AND DESCRIPTION OF FIGURES

**Example 1** relates to a method according to an embodiment of the invention.

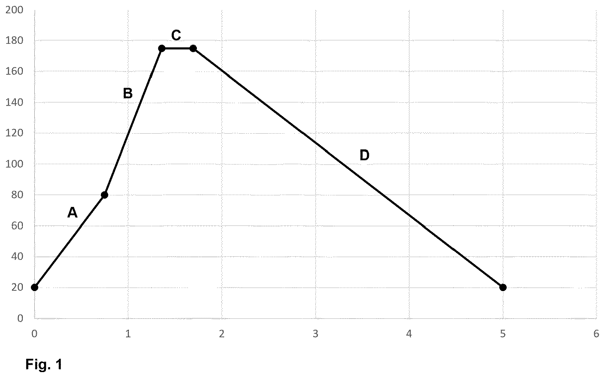

The paint is applied by spraying with a spray gun while a glass jar rotates (on a rotation device), and a lid is applied to protect the interior. Excessive paint is removed with water. It is air dried for at least 30 minutes, after which a thermal treatment was carried out, from which the temperature profile (temperature (°C)-time (h)) is given in figure 1.

The thermal treatment is performed in three steps, with each step having a specific temperature increase speed and end temperature. The first step (A) involves a temperature increase speed of 80°C/h to reach a preferred temperature of 100°C. The second step (B) involves a temperature increase speed of 156°C/h to reach a preferred temperature of 175°C. The third step (C) involves maintaining the end temperature for 20 minutes. Afterwards the oven is cooled down (D).

## Claims

1. A method for decorating a glass container with paint, comprising the sequential steps of:
i. spraying paint on a glass container,
ii. drying said glass container for at least 30 minutes,
iii. transferring said glass container to an oven, wherein said glass container is subjected to a thermal treatment, wherein said thermal treatment comprises the sequential steps of:
a. heating at a temperature increase rate of between 70 and 90°C/h until a temperature of between 70 and 90°C is reached;
b. heating at a temperature increase rate of between 145 and 165°C/h, wherein an end temperature is reached, wherein said end temperature lies between 165 and 185°C;
c. heating for 10-30 minutes at said end temperature;
d. cooling said glass container by decreasing the temperature in the oven thereby obtaining decorated glass container,
iv. removing said glass container from said oven.

2. Method according to claim 1, wherein said paint is applied in multiple layers, preferably 2 layers.

3. Method according to claim 2, wherein a drying step is carried out between spraying layers.

4. Method according to claim 3, wherein said drying step is carried out for a period of between 1 and 60 minutes, preferably between 20 and 40 minutes.

5. Method according to any of the preceding claims, wherein said glass container is engraved before applying said thermal treatment.

6. Method according to any of the preceding claims, wherein the paint is applied manually with a spray gun.

7. Method according to any of the preceding claims, wherein excessive paint is removed after spraying a layer of paint.

8. Method according to claim 7, wherein the excessive paint is removed with a cloth immersed in water.

9. Method according to any of the preceding claims, wherein a lid is applied to the glass container during spraying of the paint.

10. Method according to any of the preceding claims, wherein step (a) has a duration of between 35 and 55 minutes.

11. Method according to any of the preceding claims, wherein step (b) has a duration of between 25 and 45 minutes.

12. Method according to any of the preceding claims, wherein the temperature at the beginning of said thermal treatment is ambient temperature, preferably between 20 and 25°C.

13. Method according to any of the preceding claims, wherein the paint is an acrylic, alkyd, or epoxy paint.

14. Method according to claim 13, wherein the paint comprises organic pigments.
